# FASCICULE DE BREVET EUROPEEN

(11) **EP 2 565 371 B1**
(45) Date de publication et mention de la délivrance du brevet: **10.09.2014**
(21) Numéro de dépôt: 12290209.1
(22) Date de dépôt: 26.06.2012
(51) Int. Cl.: E21B 43/16, E21B 41/00, B65G 5/00

(54) **Procédé pour maintenir un volume de gaz dans un réservoir géologique souterrain par injection d'azote**
Verfahren zur Aufrechterhaltung eines Gasvolumens in einem unterirdischen geologischen Lager durch Stickstoffinjektion
Method for maintaining a gas volume in an underground geological reservoir by nitrogen injection

(30) Priorité: 31.08.2011 FR 1102642
(43) Date de publication de la demande: 06.03.2013
(73) Titulaire: IFP Energies Nouvelles, 92852 Rueil Malmaison Cedex (FR)
(72) Inventeur: Barroux, Claire, 92370 Chaville (FR)

(56) Documents cités:
- DE-A1-102006 047 036
- US-A- 2 272 673
- US-A- 3 306 354
- US-A- 5 566 756

## Description

La présente invention concerne le domaine de la gestion d'un gaz nuisible (gaz contenant des composés nocifs pour l'homme et/ou pour l'environnement, tels que des gaz acides) dans un réservoir géologique souterrain.

En particulier, l'invention concerne un procédé de prévention ou de remédiation permettant de réduire les fuites éventuelles vers la surface du gaz nuisible présent dans un réservoir géologique souterrain.

Les effets des émissions de gaz à effet de serre sur le climat étant, sinon pleinement prouvés, tout au moins très redoutés, l'une des solutions envisagées est l'injection des gaz nocifs dans un gisement souterrain, le gisement pouvant être un gisement d'hydrocarbures ou un aquifère.

Cette solution a été largement étudiée, les études montrant un frein à la mise en oeuvre lié aux risques de fuites, et aux dangers que ces fuites pourraient faire courir aux populations vivant dans ou en proximité du périmètre d'exploitation du réservoir souterrain.

Les fuites potentielles plus fréquemment évoquées sont celles dont les émanations sont dirigées vers la surface et qui se produisent au travers de la couverture du gisement, par exemple :
- au niveau des puits, à cause d'une mauvaise cimentation à l'endroit du passage au travers de la couverture du gisement ;
- par une fragilisation de la couverture du gisement, non inhérente à la présence de puits, due par une attaque acide de la roche résultant de la dissolution de composés acides présents dans le gaz injecté dans de l'eau présente in situ, et/ou due à une réduction de la barrière capillaire.

Pour minimiser une source potentielle de fuite, par transport dans la phase aqueuse de composés gazeux dissous (tels que dioxyde de carbone « CO₂ » ou hydrogène sulfuré « H₂S ») via de l'hydrodynamisme dans un niveau aquifère non confiné, on considère souvent qu'il faut privilégier les réservoirs dont l'eau interstitielle a une salinité relativement élevée (gisements d'hydrocarbures ou aquifères salins).

On considère aussi qu'il faut privilégier des réservoirs suffisamment profonds lorsque les gaz injectés ont une teneur notable en composés potentiellement nocifs pour l'environnement.

On connait des méthodes pour limiter les fuites. On connait par exemple une méthode destinée à stopper ou ralentir fortement le processus de migration du CO₂ en cas de perte d'intégrité du stockage, en particulier par fracturation ou microfissuration de la roche couverture, décrite dans la demande WO-2009/144390. Selon cette méthode, on met en place un agent réducteur de la mobilité du CO₂ dans le voisinage d'une zone fragile, ou fragilisée, de la couverture où une fuite de CO₂ a eu lieu, ou peut avoir lieu.

La présente invention concerne un procédé pour maintenir un volume de gaz dans une formation géologique souterraine fermée par une roche couverture supposée empêcher la remontée du gaz vers la surface. Le procédé consiste à injecter dans la formation géologique souterraine un gaz ayant les propriétés adéquates pour constituer une barrière inerte et capillaire entre la formation imperméable et le gaz à maintenir.

### La méthode selon l'invention

De façon générale, l'invention concerne un procédé pour maintenir un volume de gaz dans une formation géologique souterraine située sous une roche de couverture. Le procédé comporte les étapes suivantes :
a. on sélectionne un gaz de traitement ayant les propriétés suivantes :
   - le gaz de traitement est plus léger que le gaz à maintenir ;
   - le gaz de traitement engendre des tensions interfaciales avec des liquides aqueux ou hydrocarbonés plus importantes que le gaz à maintenir ;
   - le gaz de traitement mouille moins la roche de couverture que le gaz à maintenir ;
b. on détermine un volume de gaz de traitement à injecter en fonction des caractéristiques géologiques de ladite formation géologique souterraine et dudit volume de gaz à maintenir ;
c. on injecte ledit volume de gaz de traitement dans la formation géologique souterraine, à proximité d'une zone sommitale de la formation géologique souterraine, sous la roche de couverture, de façon à constituer une barrière inerte et capillaire entre le gaz à maintenir et la roche de couverture.

Selon l'invention, le gaz à maintenir dans la formation géologique souterraine peut être un gaz acide. Ainsi, il peut contenir du dioxyde de carbone et/ou de l'hydrogène sulfuré.

De préférence le gaz de traitement n'est pas composé majoritairement de constituants légers caractérisés par des vitesses élevées de diffusion en phase gazeuse et/ou liquide, tel que de l'hélium.

Selon l'invention, le gaz de traitement peut contenir majoritairement de l'azote.

Selon un mode de réalisation, le gaz à maintenir est injecté dans la formation géologique souterraine avant injection du gaz de traitement. Selon un autre mode de réalisation, le gaz à maintenir est injecté dans la formation géologique souterraine après injection du gaz de traitement. Enfin, selon un autre mode de réalisation, le gaz à maintenir est injecté dans la formation géologique souterraine en simultané avec l'injection du gaz de traitement.

Selon l'invention, on peut injecter le gaz de traitement au moyen de complétions moins profondes que celles par lesquelles le gaz à maintenir est injecté

Le gaz de traitement peut posséder une capacité de dissolution dans des phases liquides de nature aqueuse ou hydrocarbonées, plus faible que le gaz à maintenir.

Enfin, selon un mode de réalisation, on injecte le gaz de traitement jusqu'à ce que des perforations de puits utilisés pour l'injection soient recouvertes par le gaz de traitement.

D'autres caractéristiques et avantages du procédé selon l'invention, apparaîtront à la lecture de la description ci-après d'exemples non limitatifs de réalisations, en se référant aux figures annexées et décrites ci-après.

### Présentation succincte des figures

- les figures 1 et 2 illustrent schématiquement un procédé de mise en oeuvre de l'invention.
- les figures 3 et 4 illustrent des variations typiques en fonction de la profondeur de densités et compressibilités de différents constituants moléculaires.
- Les figures 5 et 6 illustrent les tensions interfaciales (IFT) développées par différents mélanges formant à l'équilibre deux phases l'une liquide de nature hydrocarbonée, l'autre gazeuse.
- Les figures 7 et 8 illustrent les tensions interfaciales (IFT) développées par différents mélanges formant à l'équilibre deux phases l'une liquide de nature aqueuse, l'autre gazeuse.
- La figure 9 illustre la faible solubilité de l'azote dans l'eau par rapport à la solubilité du CO₂ et de l'H₂S.

### Description détaillée du procédé

La présente invention concerne le domaine de la gestion d'un gaz nuisible (gaz contenant des composés nocifs pour l'homme et/ou pour l'environnement, tels que des gaz acides) dans un réservoir géologique souterrain.

En particulier, l'invention concerne un procédé de prévention ou de remédiation permettant de réduire les fuites éventuelles vers la surface du gaz nuisible présent dans un réservoir géologique souterrain.

Il s'agît donc, de façon générale, de maintenir un gaz dans une formation géologique souterraine située sous une formation initialement de très faible perméabilité et de très fort seuil capillaire dite « roche couverture » (« cap rock ») ou « couverture ». Ainsi, le gaz nuisible présent dans la formation géologique souterraine est appelé dans la suite de la description gaz à stocker. Ce gaz est soit injecté soit présent initialement dans la formation souterraine. En cas d'injection de gaz à stocker, l'injection de gaz peut avoir pour objectif de stocker sur du long terme le gaz injecté et/ou d'aider à la production d'hydrocarbures.

Le gaz à stocker peut en particulier être à haute teneur en dioxyde de carbone (CO₂), et/ou hydrogène sulfuré (H₂S).

Selon un exemple particulier de réalisation, le gaz considéré est un gaz à haute teneur en dioxyde de carbone (CO₂). L'invention n'est pas limitée à ce gaz, qui sert à la description dans ce qui suit, le procédé étant le même pour tout gaz nuisible présent dans un réservoir souterrain.

On considère donc une formation géologique poreuse souterraine contenant du CO₂, surmontée d'une formation géologique constituant une "roche de couverture". La formation géologique poreuse peut être une roche saturée d'eau (réservoir aquifère) ou un réservoir d'hydrocarbures.

Pour réduire les fuites éventuelles d'un volume de gaz présent dans la formation géologique souterraine à travers la couverture, on maintient ce volume de gaz en constituant une barrière inerte et capillaire entre le gaz nuisible et la couverture. Pour ce faire, le procédé selon l'invention comporte les étapes suivantes :
- on sélectionne un gaz de traitement plus léger que le gaz à stocker, inerte (c'est-à-dire non réactif avec les fluides et la roche de la formation géologique souterraine, et non réactif avec la roche de couverture) et permettant d'augmenter la barrière capillaire entre le gaz et la couverture ;
- on détermine un volume de gaz de traitement à injecter en fonction des caractéristiques géologiques de ladite formation géologique souterraine et dudit volume de gaz à maintenir ;
- on injecte ledit volume de gaz de traitement dans la formation géologique souterraine.

### 1. Sélection du gaz de traitement

On sélectionne un gaz de traitement ayant les propriétés suivantes :
- le gaz de traitement est plus léger que le gaz à stocker. Cette propriété permet au gaz de traitement de se positionner entre le gaz à stocker et la couverture.
- le gaz de traitement augmente la barrière capillaire au niveau de la couverture. Ceci afin de limiter la fuite du gaz à stocker à travers la couverture.

Pour cette troisième propriété, on peut sélectionner un gaz de traitement ayant les propriétés suivantes :
- le gaz de traitement engendre des tensions interfaciales avec les liquides aqueux ou hydrocarbonés plus importantes que le gaz à stocker, et
- le gaz de traitement mouille moins la roche de couverture que le gaz à maintenir. Si possible, le gaz de traitement ne mouille pas la roche de couverture qui reste mouillée par la phase aqueuse et/ou une phase hydrocarbonée alors que le gaz à stocker, s'il est de nature polaire et/ou acide, peut éventuellement mouiller la roche davantage qu'une phase aqueuse comme rapporté dans la publication suivante :
   P. Chiquet et al., "Capillary Alteration of Shaly Caprocks by Carbon Dioxide", SPE 94183, 2005.
   La mouillabilité est fonction du mouillage qui correspond à la capacité d'un produit à mouiller (ou à s'étaler sur) une surface. De façon générale, lorsqu'un fluide est mis en contact avec la surface d'un solide en présence d'un autre fluide non miscible, l'un des fluides va mouiller la surface davantage que le second. Lorsqu'un fluide mouille parfaitement une surface, l'angle de contact devient nul.

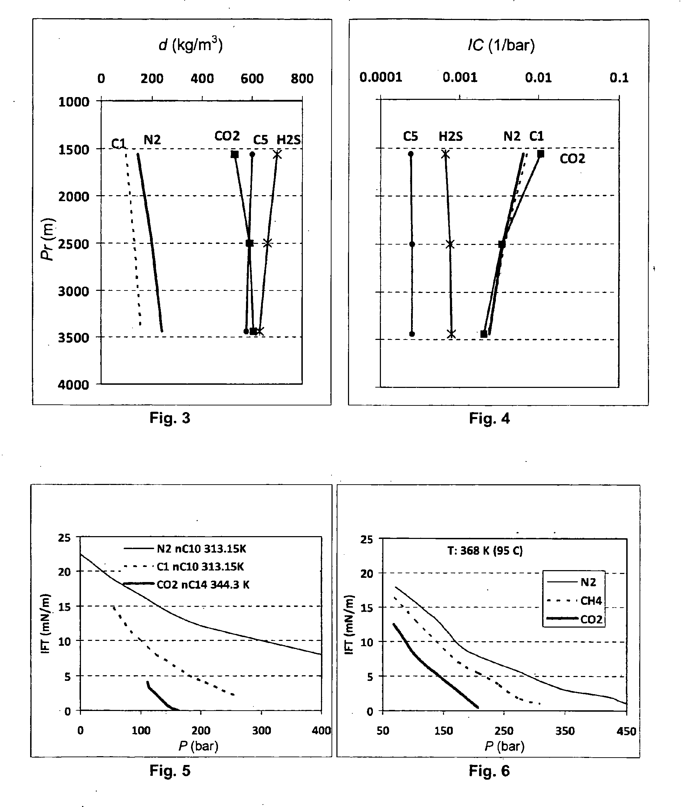

On appelle « barrière capillaire » une barrière évitant l'invasion dans un milieu poreux d'un fluide non mouillant par franchissement d'une pression capillaire de seuil. Les pressions capillaires étant proportionnelles au produit de la tension interfaciale avec le cosinus de l'angle de contact, un tel gaz de traitement permet de conserver, voire d'augmenter la barrière capillaire au niveau de la couverture, alors que la présence de gaz acides (CO₂, H₂S) tend à la réduire comme le montrent les figures 5 à 8.

De préférence le gaz de traitement n'est pas composé majoritairement de constituants légers caractérisés par des vitesses élevées de diffusion en phase gazeuse et/ou liquide ; par exemple, il n'est pas composé majoritairement par de l'hélium. Ceci pour éviter que le gaz de traitement ne quitte sa position intermédiaire entre la roche de couverture et le gaz à maintenir. Dans le cadre de gaz à stocker tel que le CO₂ ou l'H₂S, on utilise de façon préférentielle l'azote (N₂) comme gaz de traitement. En effet l'azote est un gaz non nocif, inerte et plus léger que les gaz acides :
- l'azote est plus léger que le CO₂ ou l'H₂S, comme le montre la figure 3 construite à partir de données de la base NIST, et s'accumule par ségrégation gravitaire vers le toit du gisement, en isolant donc la couverture des gaz nuisibles (CO₂ selon notre exemple) ;
- l'azote engendre des tensions interfaciales avec les liquides aqueux ou hydrocarbonés plus importantes que des composés acides comme CO₂ ou H₂S ; en termes de mouillabilité vers la roche, l'azote est par excellence un gaz non mouillant, alors que le CO₂ ou l'H₂S ont un caractère plus mouillant, ces deux gaz étant même parfois reportés comme plus mouillants ' qu'une phase aqueuse. Les pressions capillaires étant proportionnelles au produit de la tension interfaciale avec le cosinus de l'angle de contact, l'azote va donc permettre d'augmenter la barrière capillaire au niveau de la couverture, alors que la présence de gaz acides tend à la réduire comme le montrent les figures 5 à 8.

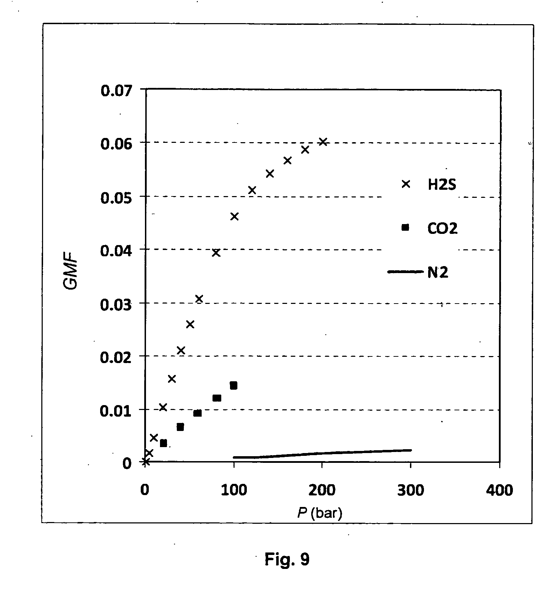

Comme le montre la figure 9, l'azote est le meilleur candidat en termes de faible dissolution vers des phases liquides de haut niveau de tension interfaciale avec des phases liquides. Cependant, on peut lui substituer en toute ou partie du méthane, ceci étant envisageable par exemple dans les pays où il y a surabondance de méthane par rapport à la taille du marché gazier. Le gaz de traitement peut également contenir des gaz inertes légers.

### 2. Détermination du volume de gaz de traitement à injecter

On détermine un volume de gaz de traitement à injecter en fonction des caractéristiques géologiques de ladite formation géologique souterraine et dudit volume de gaz à maintenir.

Les caractéristiques géologiques sont déterminées évaluées de façon connue par l'homme du métier, à partir de mesures de puits (diagraphies), de carottes, ou de campagnes sismiques.

De même la quantité de gaz à stocker en place peut être évaluée par ces mêmes méthodes. Mais ce volume peut être connu lorsque que le volume de gaz en place résulte d'une injection.

Le volume de gaz de traitement est alors déterminé de façon à ce qu'il recouvre de façon optimale la surface entre la couverture et le gaz à stocker, de façon connue par la personne de métier, typiquement par modélisation du procédé, en utilisant un simulateur de réservoir préférentiellement maillé, par exemple tel que PumaFlow (IFP Energies nouvelles, France).

### 3. injection du volume de gaz de traitement dans la formation

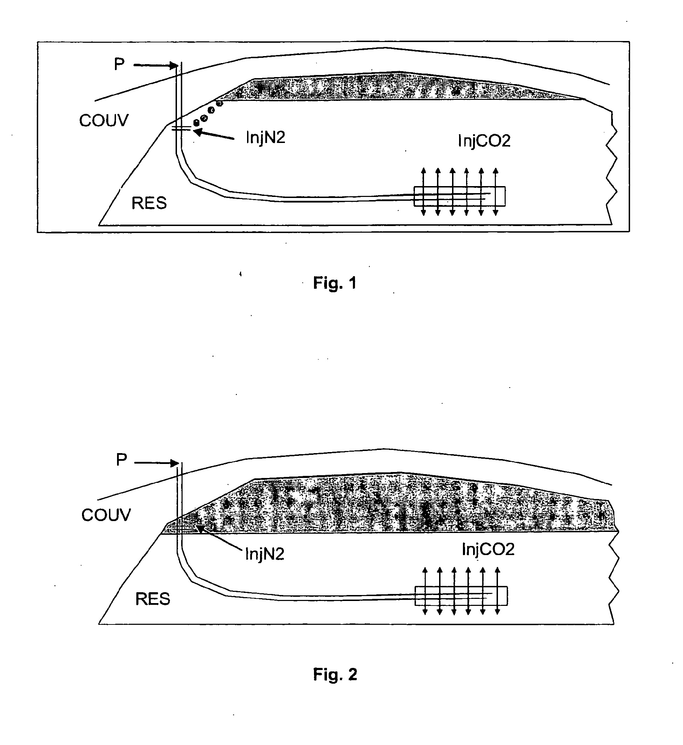

On injecte le volume de gaz de traitement dans la formation géologique souterraine contenant le gaz à stocker. De façon préférentielle, on injecte ce gaz de traitement proche de la couverture, c'est-à-dire en proximité d'une zone sommitale de la formation, plutôt qu'à la base de la formation comme l'illustrent les figures 1 et 2.

Les figures 3 et 4 illustrent des variations typiques en fonction de la profondeur (Pr) de densités d (figure 3) et de compressibilités /C de différents constituants moléculaires : le méthane (C1), l'azote (N₂), le dioxyde de carbone (CO₂), l'hydrogène sulfuré (H₂S), le normal-pentane (C5). Ces variations en fonction de la profondeur ont été obtenues en utilisant un gradient de pression hydrostatique et un gradient de température de 3.2 °C par 100 mètres.

On constate que, quelque soit la profondeur l'azote est notoirement plus léger que le CO₂ ou l'H₂S, dont la densité est proche de celle du normal-pentane. Comparé au méthane, l'azote est légèrement plus lourd. La compressibilité de l'azote est proche de celle du méthane et du CO₂.

Les figures 5, 6 illustrent, en fonction de la pression P, les tensions interfaciales (IFT) gaz-liquide développées par différents mélanges, la phase liquide étant hydrocarbonée. La figure 5 illustre des cas de mélanges binaires avec le normal décane (n-C10) ou le normal tétra décane (n-C14). La courbe pour le mélange avec l'azote (N₂) est issue de Tang 1996, celle avec le méthane (C1) est issue de Amin, 1998, et celle avec le CO₂ de Gasem, 1989 :
- Amin R., Smith T. N. "Interfacial Tension and Spreading Coefficient Under Reservoir Conditions". Fluid Phase Equilibria, 142, 1998, 231-241.
- Tang J., Satherley J., Schiffrin, D. J.: "Density and Interfacial Tension of Nitrogen Hydrocarbon Systems at Elevated Pressures". Chinese Journal of Chemical Engineering, 1993, 1, 4, 223-301.
- Gasem K. A. M., Dickson K. B., Dulcamara P. B., Nagarajan N., Robinson Jr. R. L.: "Equilibrium Phase Compositions, Phase Densities, and Interfacial Tensions for CO2 + Hydrocarbon Systems. 5. CO2 + n-Tetradecane", J. Chem. Eng. Data, 1989, 34, 191-195

La figure 6 illustre des cas de mélanges d'un constituant gazeux N₂, CO₂ ou CH4 avec un liquide hydrocarboné léger dit condensat. Ces courbes sont issues de AI-Abri *et al*., 2011 :
- AI-Abri A., Amin R.: "Effect of Hydrocarbon and Non-Hydrocarbon Gas Injection on the Interfacial Tension of a Gas Condensate System", Chem. Eng. Technol., 2011, 34, No. 1, 127-133

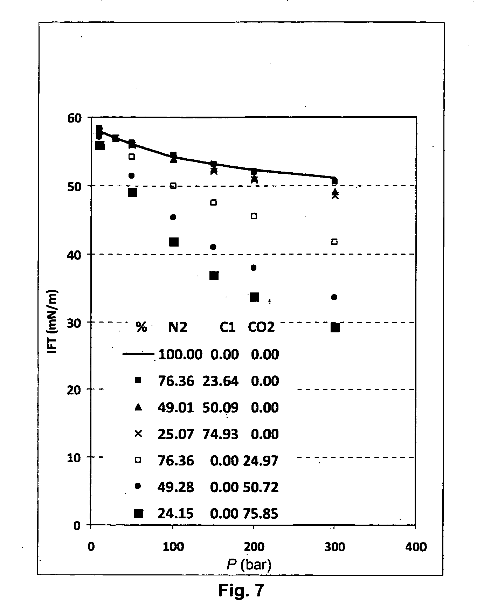

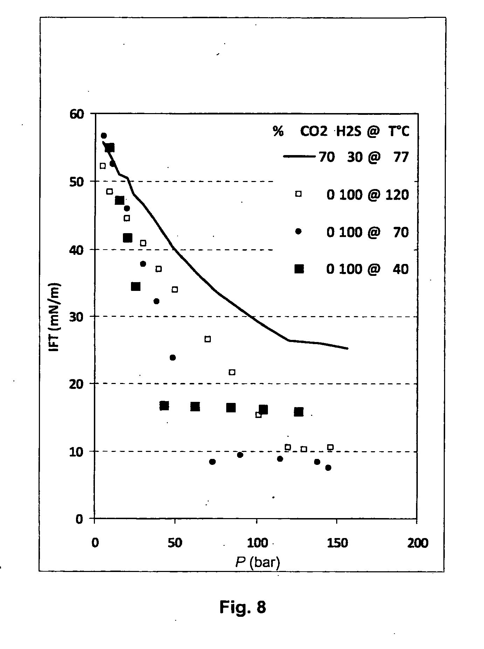

Les figures 7 et 8 illustrent, en fonction de la pression *P*, les tensions interfaciales (IFT) gaz-liquide développées par différents mélanges, la phase liquide étant essentiellement aqueuse. La figure 7 est issue de Yan *et al.,* 2001 et la figure 8 est issue de Shah *et al.,* 2008 :
- Yan W., Zhao G.Y., Chen G.J. and Guo T.M.: "Interfacial Tension of (Methane + Nitrogen) + Water and (Carbon Dioxide + Nitrogen) + Water Systems", Journal of Chemical and Engineering Data, Vol. 46, No. 6, 2001, 1545
- Shah V., Broseta D., Mouronval G., Montel F.: "Water/acid gas interfacial tensions and their impact on acid gas geological storage", International Journal of Greenhouse Gas Control 2, 2008, 594 - 604

On note que la présence d'azote provoque une augmentation sensible des tensions interfaciales entre phases gazeuse et liquide, et ce, quelque soit la nature de la phase liquide (hydrocarbonée ou aqueuse).
La figure 8 illustre, en fonction de la pression *P*, les tensions interfaciales (IFT) développées par des systèmes H₂S-eau et H₂S-CO₂-eau. On note que la présence d'hydrogène sulfuré tend à réduire les tensions interfaciales avec la phase aqueuse d'une façon encore plus marquée que le CO₂.
La figure 9 illustre, en fonction de la pression *P*, la faible solubilité de l'azote dans l'eau par rapport à la solubilité du CO₂ et de l'H₂S. En ordonnée, *GMF* représente la fraction molaire des gaz présente dans la phase aqueuse. La figure 9 est issue de Duan *et al.,* 2007, Nighswander *et al.,* 1989 et Goodman *et al.,* 1931 :
   - Duan Z., Sun R.; Liu R., and Zhu C.: "Accurate Thermodynamic Model for the Calculation of H2S Solubility in Pure Water and Brines", Energy & Fuels 2007, 21, 2056-2065
   - John A. Nighswander, Nicolas Kalogerakis, and Anil K. Mehrotra: "Solubilities of carbon dioxide in water and 1 wt. % sodium chloride solution at pressures up to 10 MPa and temperatures from 80 to 200.degree.C", J. Chem. Eng. Data, 1989, 34 (3), pp. 355-360
   - Goodman J.B., Krase N.W.: "Solubility of Nitrogen in Water at High Pressures and Temperatures", INDUSTRIAL AND ENGINEERING CHEMISTRY, Vol.23, N°4, pp. 401-404, April, 1931

Ce procédé selon l'invention, s'intègre parfaitement dans le cadre de l'injection du stockage géologique de gaz acide tel que le dioxyde de carbone. Ainsi, la présente invention concerne également un procédé de stockage géologique de gaz acide dans lequel on injecte le gaz nuisible dans un réservoir souterrain.

Lorsque le gaz à stocker est injecté dans la formation réservoir du sous-sol, le procédé comporte les étapes suivantes :
- on sélectionne un gaz de traitement non réactif avec les fluides et roche de couverture permettant d'augmenter la barrière capillaire entre le gaz et la couverture ;
- on détermine un volume de gaz de traitement à injecter en fonction des caractéristiques géologiques de ladite formation géologique souterraine et dudit volume de gaz à maintenir ;
- on injecte ledit volume de gaz de traitement dans la formation géologique souterraine.
- on injecte ledit volume de gaz à stocker dans la formation géologique souterraine.

Selon un autre mode de réalisation, les deux dernières étapes sont inversées : on injecte d'abord le gaz à stocker (CO₂), puis on injecte le gaz de traitement (N₂). Le procédé s'apparente alors à un procédé de prévention de fuites voire de rémédiation ; en effet, la tendance de l'azote à ne pas se dissoudre dans des phases liquides et à ségréger de façon gravitaire est une tendance forte, qui peut donc être utilisée pour repousser les espèces nocives plus lourdes que l'azote vers le bas du gisement et isoler ainsi la couverture du gisement du contact avec ces espèces nocives.

Un même puits injecteur peut être utilisé pour injecter le gaz à stocker et le gaz à maintenir, mais une telle configuration n'est pas limitative en réalisation.

Une injection simultanée par un ou plusieurs puits est également réalisable dans le cadre de l'invention.

Dans le cadre du stockage géologique de gaz acide, on choisit préférentiellement un gaz de traitement qui possède en plus une capacité de dissolution dans les phases liquides de nature aqueuse ou hydrocarbonée, plus faible que le gaz à stocker. Dans le cadre de gaz à stocker tel que le CO₂ ou l'H₂S, on utilise de façon préférentielle l'azote (N₂) comme gaz de traitement. En effet l'azote se dissout beaucoup moins dans les phases liquides de nature aqueuse ou hydrocarbonée que le CO₂ ou l'H₂S, l'azote va donc rester sous forme gazeuse, et va permettre d'accroître la compressibilité totale du système, et ainsi de réduire les risques de surpression et d'augmenter l'injectivité des gaz à teneur en CO₂ et/ou H₂S.

Cette mise en oeuvre est schématisée très simplement sur les figures 1 et 2. Sur ces figures la couverture est notée COUV, le réservoir ou formation géologique de stockage est noté RES, le puits est noté P, les perforations utilisées pour l'injection d'azote sont notées InjN2, l'azote étant repéré par un couleur grisée, et enfin, les perforations utilisées pour l'injection de CO₂ sont notées InjCO2. Dans la figure 2, le volume de gaz de traitement recouvre les perforations InjN2, ce qui réduit le risque de fuite du gaz nuisible par les perforations utilisées pour injecter le gaz de traitement. Cette seconde réalisation de mise en oeuvre est à privilégier. L'injection d'azote peut se faire par le(s) même puits que celui (ceux) utilisé(s) pour injecter le gaz à stocker (figure 1 et 2) ou par un autre puits. Cette injection se fait préférentiellement au moyen de complétions moins profondes que celles par lesquelles le gaz à stocker est injecté, comme l'illustrent les figures 1 et 2.

On peut envisager, une injection de gaz à stocker via une portion de drain horizontal éloignée de la portion du puits traversant la couverture, la déportation de l'endroit de l'injection de gaz à stocker par rapport à la localisation de la traversée de la couverture par le puits.

L'injection d'azote permet également de déplacer des liquides présents dans le réservoir (voire de participer à produire des liquides par des puits producteurs), ce qui participe à augmenter la compressibilité globale du milieu, et ce faisant d'en augmenter l'injectivité. Par exemple dans le cas d'un aquifère, l'injection d'azote provoque un déplacement de la phase aqueuse qui peut être produite par des puits producteurs.

## Revendications

1. Procédé pour maintenir un volume de gaz dans une formation géologique souterraine située sous une roche de couverture, **caractérisé en ce que** :
a. on sélectionne un gaz de traitement ayant les propriétés suivantes :
- le gaz de traitement est plus léger que le gaz à maintenir ;
- le gaz de traitement engendre des tensions interfaciales avec des liquides aqueux ou hydrocarbonés plus importantes que le gaz à maintenir ;
- le gaz de traitement mouille moins la roche de couverture que le gaz à maintenir ;
b. on détermine un volume de gaz de traitement à injecter en fonction des caractéristiques géologiques de ladite formation géologique souterraine et dudit volume de gaz à maintenir ;
c. on injecte ledit volume de gaz de traitement dans la formation géologique souterraine, à proximité d'une zone sommitale de la formation géologique souterraine, sous la roche de couverture, de façon à constituer une barrière inerte et capillaire entre le gaz à maintenir et la roche de couverture.

2. Procédé selon l'une des revendications précédentes, dans lequel le gaz à maintenir dans la formation géologique souterraine est un gaz acide.

3. Procédé selon la revendication 2, dans lequel le gaz à maintenir dans la formation géologique souterraine contient du dioxyde de carbone et/ou de l'hydrogène sulfuré.

4. Procédé selon l'une des revendications précédentes, dans lequel le gaz de traitement n'est pas composé majoritairement de constituants légers **caractérisés par** des vitesses élevées de diffusion en phase gazeuse et/ou liquide, tel que de l'hélium.

5. Procédé selon l'une des revendications précédentes, dans lequel le gaz de traitement contient majoritairement de l'azote.

6. Procédé selon l'une des revendications précédentes, dans lequel le gaz à maintenir est injecté dans ladite formation géologique souterraine avant - injection dudit gaz de traitement.

7. Procédé selon l'une des revendications 1 à 5, dans lequel le gaz à maintenir est injecté dans ladite formation géologique souterraine après injection dudit gaz de traitement.

8. Procédé selon l'une des revendications 1 à 5, dans lequel le gaz à maintenir est injecté dans ladite formation géologique souterraine en simultané avec l'injection dudit gaz de traitement.

9. Procédé selon l'une des revendications 1 à 8, dans lequel on injecte le gaz de traitement au moyen de complétions moins profondes que celles par lesquelles le gaz à maintenir est injecté

10. Procédé selon l'une des revendications précédentes, dans lequel le gaz de traitement possède une capacité de dissolution dans des phases liquides de nature aqueuse ou hydrocarbonées, plus faible que ledit gaz à maintenir.

11. Procédé selon l'une des revendications précédentes, dans lequel on injecte le gaz de traitement jusqu'à ce que des perforations de puits utilisés pour ladite injection soient recouvertes par ledit gaz de traitement.

## Patentansprüche

1. Verfahren zum alten eines Gasvolumens in einer unterirdischen geologischen Formation, die sich unter einem Deckgestein befindet, **dadurch gekennzeichnet, dass**:
a. ein Behandlungsgas ausgewählt wird, das die folgenden Eigenschaften aufweist:
- das Behandlungsgas ist leichter als das zu haltende Gas;
- das Behandlungsgas führt zu Grenzflächenspannungen mit wässrigen oder kohlenwasserstoffhaltigen Flüssigkeiten, die in größerer Menge vorhanden sind, als das zu haltende Gas;
- das Behandlungsgas befeuchtet das Deckgestein weniger als das zu haltende Gas;
b. ein zu injizierendes Behandlungsgasvolumen in Abhängigkeit von den geologischen Merkmalen der unterirdischen geologischen Formation und dem zu haltenden Gasvolumen bestimmt wird;
c. das Behandlungsgasvolumen in die unterirdische geologische Formation in der Nähe eines Gipfelbereichs der unterirdischen geologischen Formation unter das Deckgestein injiziert wird, um eine inerte und kapillare Sperre zwischen dem zu haltenden Gas und dem Deckgestein zu bilden.

2. Verfahren nach einem der vorhergehenden Ansprüche, wobei das in der unterirdischen geologischen Formation zu haltende Gas ein saures Gas ist.

3. Verfahren nach Anspruch 2, wobei das in der unterirdischen geologischen Formation zu haltende Gas Kohlendioxid und/oder Schwefelwasserstoff enthält.

4. Verfahren nach einem der vorhergehenden Ansprüche, wobei das Behandlungsgas nicht überwiegend aus leichten Bestandteilen besteht, die durch hohe Diffusionsgeschwindigkeiten in gasförmiger und/oder flüssiger Phase gekennzeichnet sind, wie etwa Helium.

5. Verfahren nach einem der vorhergehenden Ansprüche, wobei das Behandlungsgas überwiegend Stickstoff enthält.

6. Verfahren nach einem der vorhergehenden Ansprüche, wobei das in der unterirdischen geologischen Formation zu haltende Gas vor der Injektion des Behandlungsgases injiziert wird.

7. Verfahren nach einem der Ansprüche 1 bis 5, wobei das in der unterirdischen geologischen Formation zu haltende Gas nach der Injektion des Behandlungsgases injiziert wird.

8. Verfahren nach einem der Ansprüche 1 bis 5, wobei das in der unterirdischen geologischen Formation zu haltende Gas gleichzeitig mit der Injektion des Behandlungsgases injiziert wird.

9. Verfahren nach einem der Ansprüche 1 bis 8, wobei das Behandlungsgas mithilfe von Komplettierungen injiziert wird, die weniger tief sind als diejenigen, mit denen das zu haltende Gas injiziert wird.

10. Verfahren nach einem der vorhergehenden Ansprüche, wobei das Behandlungsgas ein Vermögen zur Auflösung in flüssigen Phasen wässriger oder kohlenwasserstoffhaltiger Natur aufweist, das geringer ist als das des zu haltenden Gases.

11. Verfahren nach einem der vorhergehenden Ansprüche, wobei das Behandlungsgas injiziert wird, bis die Bohrlochbohrungen, die für die Injektion verwendet werden, von dem Behandlungsgas bedeckt sind.

## Claims

1. A method for keeping a volume of gas in an underground geological formation located beneath a cap rock, **characterized in that** it comprises:
a. selecting a treating gas having the following properties:
- the treating gas is lighter than the gas to be kept,
- the treating gas generates greater interfacial tension with aqueous or hydrocarbon-containing liquids than the gas to be kept,
- the treating gas wets the cap rock less than the gas to be kept,
b. determining a volume of treating gas to be injected according to the geological characteristics of said underground geological formation and said volume of gas to be kept,
c. injecting said volume of treating gas into the underground geological formation close to a top zone of the underground geological formation, beneath the cap rock, so as to form an inert capillary barrier between the gas to be kept and the cap rock.

2. A method as claimed in claim 1, wherein the gas to be kept in the underground geological formation is an acid gas.

3. A method as claimed in claim 2, wherein the gas to be kept in the underground geological formation contains carbon dioxide and/or hydrogen sulfide.

4. A method as claimed in any one of the previous claims, wherein the treating gas is not mainly made up of light constituents **characterized by** high diffusion rates in the gas and/or liquid phase, such as helium.

5. A method as claimed in any one of the previous claims, wherein the treating gas mainly contains nitrogen.

6. A method as claimed in any one of the previous claims, wherein the gas to be kept is injected into said underground geological formation prior to injecting said treating gas.

7. A method as claimed in any one of claims 1 to 5, where the gas to be kept is injected into said underground geological formation after injecting said treating gas.

8. A method as claimed in any one of said claims 1 to 5, wherein the gas to be kept is injected into said underground geological formation while simultaneously injecting said treating gas.

9. A method as claimed in any one of claims 1 to 8, wherein the treating gas is injected through completions shallower than those through which the gas to be kept is injected.

10. A method as claimed in any one of the previous claims, wherein the treating gas has a lower capacity to dissolve in liquid phases of aqueous or hydrocarbon-containing nature than said gas to be kept.

11. A method as claimed in any one of the previous claims, wherein the treating gas is injected until perforations of wells used for said injection are covered by said treating gas.
